# EUROPEAN PATENT SPECIFICATION

(11) **EP 3 404 384 B1**
(45) Date of publication and mention of the grant of the patent: **25.11.2020**
(21) Application number: 17738415.3
(22) Date of filing: 11.01.2017
(51) Int. Cl.: G01K 7/22, G01K 1/08

(54) **TEMPERATURE DETECTION DEVICE**
TEMPERATURERFASSUNGSVORRICHTUNG
DISPOSITIF DE DÉTECTION DE TEMPÉRATURE

(30) Priority: 15.01.2016 JP 2016006390; 25.01.2016 JP 2016011870
(43) Date of publication of application: 21.11.2018
(73) Proprietor: Honda Motor Co., Ltd., Tokyo 107-8556 (JP)
(72) Inventor: YAMASHITA Akihiko, Wako-shi Saitama 351-0193 (JP); KANAOKA Yoji, Wako-shi Saitama 351-0193 (JP)
(74) Representative: Weickmann & Weickmann PartmbB
(86) International application number: PCT/JP2017/000582
(87) International publication number: WO 2017/122661

(56) References cited:
- JP-A- H10 221 179
- JP-A- 2002 013 987
- JP-U- H 025 037
- US-A1- 2003 146 819

## Description

### TECHNICAL FIELD

The present invention relates to a temperature detection device having a heat-sensitive element, a lead wire for the heat-sensitive element, and a resin case for fixing the heat-sensitive element and the lead wire.

### BACKGROUND ART

JP 2-26362 A discloses an oil temperature detection device that is utilized in an automatic transmission. The oil temperature detection device includes a sensor case made of metal. A thermistor and a lead wire are encased in a resin and fixed within the sensor case. The sensor case includes a small diameter cylindrical part at its extremity and a large diameter cylindrical part that is connected to the rear end of the small diameter cylindrical part and has a larger diameter than that of the small diameter cylindrical part, and a male thread is cut in a cylindrical face of the large diameter cylindrical part. The sensor case is screwed into a transmission case via the large diameter cylindrical part.US 2003/146819 A1 shows a temperature detection device according to the preamble of claim 1.

### SUMMARY OF THE INVENTION

### PROBLEMS TO BE SOLVED BY THE INVENTION

The oil temperature detection device disclosed in JP 2-26362 A has a complicated shape for the sensor case, and since the sensor case is molded by forging or casting from a metal material, the sensor case is heavy. Moreover, the production cost is high.

The present invention has been accomplished in light of such circumstances, and it is an object thereof to provide a temperature detection device that contributes to a lightening of the weight and a reduction in the cost.

### MEANS FOR SOLVING THE PROBLEMS

The present invention provides a temperature detection device according to claim 1.

According to a first aspect of the present invention, the temperature detection device comprises a heat-sensitive element, a lead wire of the heat-sensitive element, a resin case for fixing the heat-sensitive element and the lead wire, and a metal cap that is fitted onto an extremity of the resin case.

According to a second aspect of the present invention, in addition to the first aspect, the metal cap is formed into a cylindrical shape having a rounded extremity.

According to a third aspect of the present invention, in addition to the first or second aspect, the resin case comprises a resin cap that houses the heat-sensitive element and the lead wire inside the metal cap.

According to a fourth aspect of the present invention, in addition to the third aspect, the metal cap is embedded in the resin case at a first length from an end part of the resin case, and the resin cap is embedded in the resin case at a second length from the end part of the resin case, the second length being longer than the first length.

According to a fifth aspect of the present invention, in addition to the fourth aspect, the resin cap has an end part opening within a resin material of the resin case, the end part being provided with an increased diameter portion that extends outward in a radial direction of the resin cap.

According to a sixth aspect of the present invention, in addition to the fifth aspect, the increased diameter portion is provided with a highly-bound part for preventing displacement.

According to a seventh aspect of the present invention, in addition to any one of the first to sixth aspects, the resin case comprises a cylindrical insertion part that is coaxial with the metal cap, has a larger diameter than a diameter of the metal cap, and supports the metal cap via a front end thereof, and a flange that is formed at a rear end of the insertion part and extends from the insertion part in a centrifugal direction, the metal cap being provided within the insertion part in an axial direction.

According to an eighth aspect of the present invention, in addition to the seventh aspect, the device comprises a coupler that is continuous from the flange in the axial direction of the insertion part and has a metal terminal.

According to a ninth aspect of the present invention, in addition to the seventh or eighth aspect, the device comprises an O ring that is fitted onto the metal cap and extends further in the centrifugal direction than the insertion part while contacting an extremity of the insertion part.

According to a tenth aspect of the present invention, in addition to the ninth aspect, when the device is utilized as a temperature sensor for engine cooling water, the insertion part is inserted into an insertion hole bored in an outer wall of a water jacket defining a passage through which the cooling water is circulated, and an extremity of the metal cap is disposed within the passage via a through hole that is continuous with the insertion hole and has a smaller diameter than the insertion hole in a state in which the metal cap is sealed with the O ring.

According to an eleventh aspect of the present invention, in addition to the tenth aspect, the flange has a shape-change part that corresponds to a shape of an outer wall of the water jacket.

According to a twelfth aspect of the present invention, in addition to the eleventh aspect, the shape-change part is a step part corresponding to a shape of a thick part that bulges from an outer wall face of the water jacket.

### EFFECTS OF THE INVENTION

In accordance with the first aspect, since the metal cap is fitted only to the extremity of the case, compared with a case in which the entire case is made of metal, the weight can be lightened. Moreover, the cost can be reduced.

In accordance with the second aspect, the metal cap can be simply formed by drawing. Moreover, the rounded closed extremity can extend from the heat-sensitive element at as uniform a distance as possible, and as a result good heat conduction can be realized.

In accordance with the third aspect, when molding the resin case, the heat-sensitive element and the lead wire can be housed within the resin cap in advance. Therefore, at the time of resin injection during molding, the heat-sensitive element and the lead wire can be provisionally fixed with a defined positional relationship. The operating efficiency of the molding step can thus be enhanced.

In accordance with the fourth aspect, since the resin cap on the inner side is embedded in the resin case at the second length, which is longer than the first length for the metal cap on the outer side, it is possible by means of the resin cap alone to enhance the resin bonding strength between the resin cap and the resin case, and as a result the strength via which the metal cap and the resin case are joined can be weaker. It is possible to contribute to a reduction in the size of the metal cap and a lightening of the weight.

In accordance with the fifth aspect, the workability when inserting sensor components such as the heat-sensitive element and the lead wire into the resin cap can be improved, thus making the production process efficient and reducing the cost.

In accordance with the seventh aspect, when fixing the temperature detection device, the insertion part of the resin case is inserted into the insertion hole of another member. Since the flange has a larger diameter than that of the insertion part, the flange abuts against a part around the insertion hole to thus position the metal cap in the axial direction with respect to the other member. Since the metal cap does not extend throughout the insertion part, the rear end of the metal cap does not protrude from the other member, and radiation of heat from the metal cap is suppressed. In this way, the thermal energy of a measurement target is reliably transferred to the heat-sensitive element via the metal cap. The temperature can be measured effectively.

In accordance with the eighth aspect, compared with a case in which a thermistor or a lead wire is inserted directly into a metal cap and a coupler is molded as in a conventional case, the length of the coupler in the resin case can be reduced, thus alleviating vibration or impact from the resin case acting on a sensor part.

In accordance with the ninth aspect, when the insertion part is inserted into the insertion hole, the O ring makes intimate contact with the inner wall face of the insertion hole. The O ring partitions the interior of the insertion hole into a space in which the metal cap is exposed and a space in which the insertion part and the flange are exposed. Therefore, fluid as a measurement target does not move around the O ring and reach the insertion part or the flange. Waterproofness can thus be realized for the resin case.

In accordance with the tenth aspect, since only the metal cap is in contact with the cooling water of the engine and the resin case is sealed so that it does not contact the cooling water, the durability of the temperature detection device is improved, and an appropriate sealing structure can simply be realized merely by fitting it into the insertion hole via the seal member.

In accordance with the eleventh aspect, since the shape of the flange reflects the shape of the outer wall of the engine water jacket, it is unnecessary to greatly change the sensor shape, and the cost can be reduced.

In accordance with the twelfth aspect, it is possible to increase the strength of the sensor mounting part on the outer wall of the water jacket without greatly changing the sensor shape.

### BRIEF DESCRIPTION OF DRAWINGS

[FIG. 1] FIG. 1 is a perspective view schematically showing a temperature detection device related to one embodiment of the present invention.
[FIG. 2] FIG. 2 is a vertical sectional view of the temperature detection device.
[FIG. 3] FIG. 3 is an external view schematically showing a vehicle on which the temperature detection device is mounted and a power unit.
[FIG. 4] FIG. 4 is a vertical sectional view of the temperature detection device showing a mounted state.
[FIG. 5] FIG. 5 shows an exploded perspective view and a perspective view of the temperature detection device.
[FIG. 6] FIG. 6 is a vertical sectional view of a temperature detection device including a resin case related to another embodiment.
[FIG. 7] FIG. 7 is an enlarged perspective view of a resin case related to another embodiment.
[FIG. 8] FIG. 8 is a vertical sectional view schematically showing a temperature detection device having a step part corresponding to the shape of an outer wall face of a water jacket.

### EXPLANATION OF REFERENCE NUMERALS AND SYMBOLS

- 11: Temperature detection device
- 12: Resin case
- 13: Insertion part
- 14: Flange
- 17: Coupler
- 21: Metal cap
- 21a: Extremity
- 22: O ring
- 25: Resin cap
- 25a: Increased diameter portion
- 27: Heat-sensitive element (thermistor)
- 28: Lead wire
- 29: Metal terminal
- 33: Passage
- 34: Insertion hole
- 36: Through hole
- 42: Highly-bound part
- 44: Thick part
- 46: Shape-change part
- 101: Water jacket
- L1: First length
- L2: Second length

### MODES FOR CARRYING OUT THE INVENTION

One embodiment of the present invention is explained below by reference to the attached drawings.

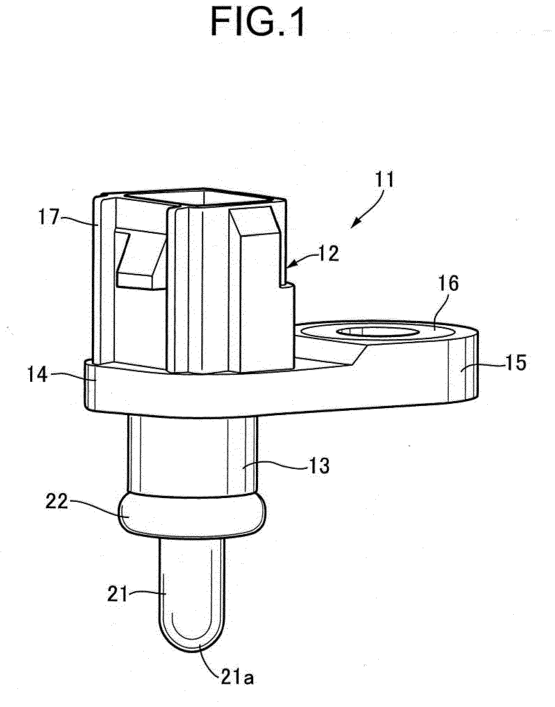

FIG. 1 schematically shows a temperature detection device 11 related to one embodiment of the present invention. The temperature detection device 11 includes a resin case 12. The resin case 12 has a cylindrical insertion part 13 and a flange 14 that is connected to one end of the insertion part 13 and extends outward from the insertion part 13 in the centrifugal direction along a virtual plane orthogonal to the axis of the insertion part 13. The flange 14 is continuous with a mounting part 15 extending along a virtual plane orthogonal to the axis. A metal collar 16 is embedded in the mounting part 15. The axis of the metal collar 16 is parallel to the axis of the insertion part 13.

The flange 14 is continuous with a coupler 17 in the axial direction. The coupler 17 can have for example a coupler of a wiring cable joined thereto. An electrical signal for identifying temperature is taken out from the coupler 17. The insertion part 13, the flange 14, the mounting part 15 and the coupler 17 may be molded from a resin material by integral molding.

A metal cap 21 is mounted on the other end of the insertion part 13. The metal cap 21 is formed into a cylindrical shape having a rounded closed extremity 21a. The metal cap 21 is disposed coaxially with the insertion part 13. The external diameter of the insertion part 13 is larger than the external diameter of the metal cap 21. The metal cap 21 is supported on the insertion part 13 via the side opposite to the extremity 21a.

An O ring 22 is fitted onto the metal cap 21. The O ring 22 is formed from an elastic material such as rubber. The O ring 22 makes contact with an end face of the insertion part 13. Here, the outer periphery of the O ring 22 extends further outward in the centrifugal direction than the insertion part 13.

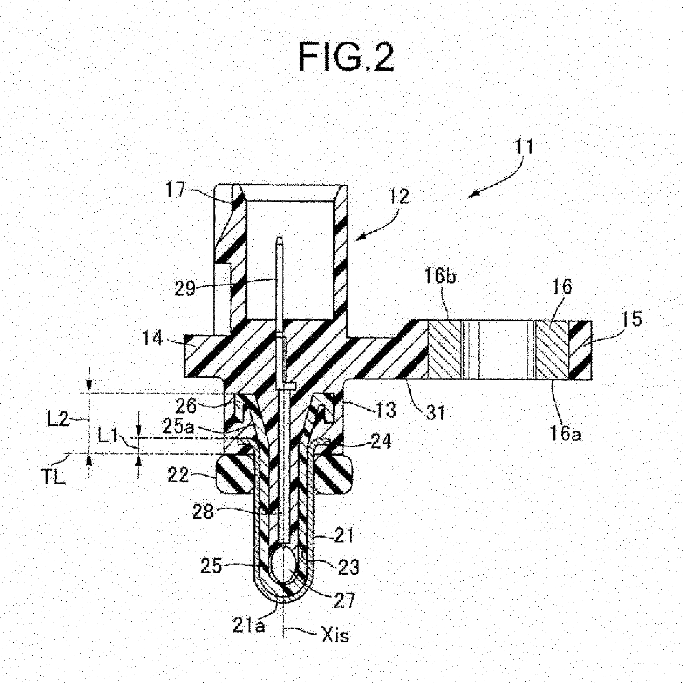

As shown in FIG. 2, the metal cap 21 is formed by deep drawing from a thin plate having a uniform thickness. Defined inside the metal cap 21 is an interior space 23 having a similar shape to the external diameter. A retaining part 24 extending outward from the cylindrical body is formed at one end of the metal cap 21 on the side opposite to the extremity 21a. The retaining part 24 is enclosed in a resin body of the insertion part 13. Due to such a function of the retaining part 24 the metal cap 21 is prevented from falling out of the resin case 12.

Joined to the resin case 12 is a resin cap 25. The resin cap 25 is housed in the interior space 23 of the metal cap 21. The resin cap 25 is similar in shape to the metal cap 21, and has a cylindrical body having a rounded closed extremity. The resin cap 25 makes intimate contact with an inner face of the metal cap 21 via the cylindrical body.

The resin cap 25 has an end part opening within the resin body of the resin case 12 on the side opposite to the extremity. Formed on the end part is an increased diameter portion 25a that extends outward in the radial direction from the cylindrical body of the resin cap 25 in going toward its opening. Continuous with the rear end of the increased diameter portion 25a is a latching part 26 that extends outward from the cylindrical body and bends back toward the extremity on its outer periphery. The increased diameter portion 25a and the latching part 26 are enclosed in the resin body of the insertion part 13. In this way, the resin cap 25 is prevented from falling out of the insertion part 13.

Here, the metal cap 21 is embedded in the resin case 12 via a first length L1 from an end face TL of the insertion part 13 of the resin case 12. The resin cap 25 is embedded in the resin case 12 via a second length L2 that is longer than the first length L1 from the end face TL of the resin case 12. The increased diameter portion 25a and the latching part 26 of the resin cap 25 are enclosed in the resin material of the resin case 12 individually and independently from the metal cap 21.

Housed within the resin cap 25 are a thermistor 27 as a heat-sensitive element and a lead wire 28 extending from the thermistor 27. Glass, which greatly changes electrical resistance according to change in temperature, is enclosed in the thermistor 27. The thermistor 27 and the lead wire 28 are encased in a resin within the resin cap 25. In this way, the thermistor 27 and the lead wire 28 are fixed to the resin case 12. A metal terminal 29 of the coupler 17 is connected to the lead wire 28.

A mounting face 31 is defined on the flange 14 and the mounting part 15 of the resin case 12. The mounting face 31 is defined as a plane orthogonal to an axis Xis of the metal cap 21. A contact face 16a that is flush with the mounting face 31 is defined on the metal collar 16. A bolt receiving face 16b that extends in parallel with the contact face 16a is similarly defined on the metal collar 16.

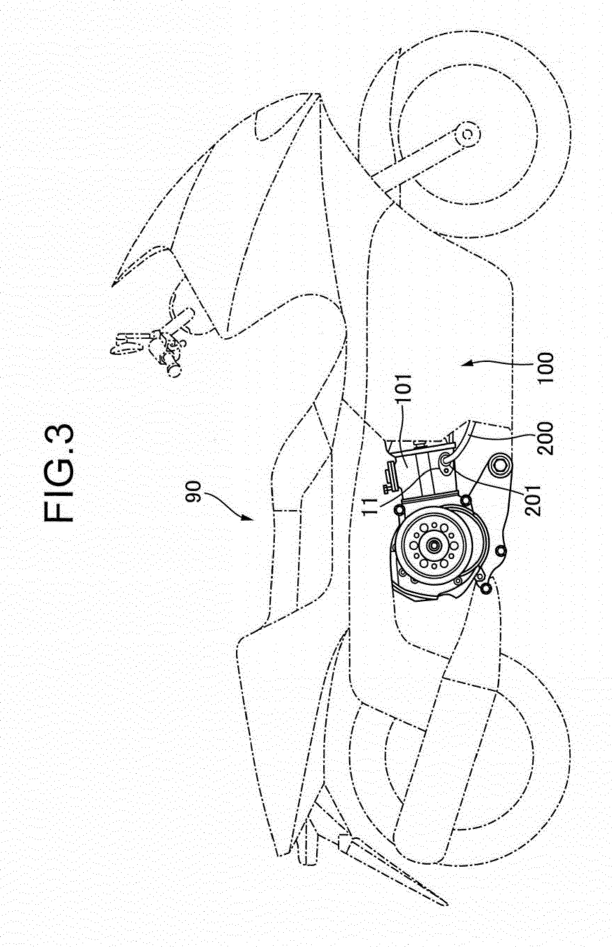

The temperature detection device 11 is utilized for example when measuring the temperature of engine cooling water. As shown in FIG. 3, an engine 100 forms a power unit of a two-wheeled motor vehicle such as a scooter or another vehicle 90. The temperature detection device 11 is mounted on an outer wall of a water jacket 101 of the engine 100. A coupler 201 of an external harness 200 is connected to the temperature detection device 11. A metal terminal of the coupler 201 is electrically connected to a metal terminal 29 of the coupler 17. The temperature detection device 11 detects the temperature (detectable temperature -50°C to 200°C) of cooling water flowing within the water jacket 101 and outputs a detected value to an ECU (not illustrated).

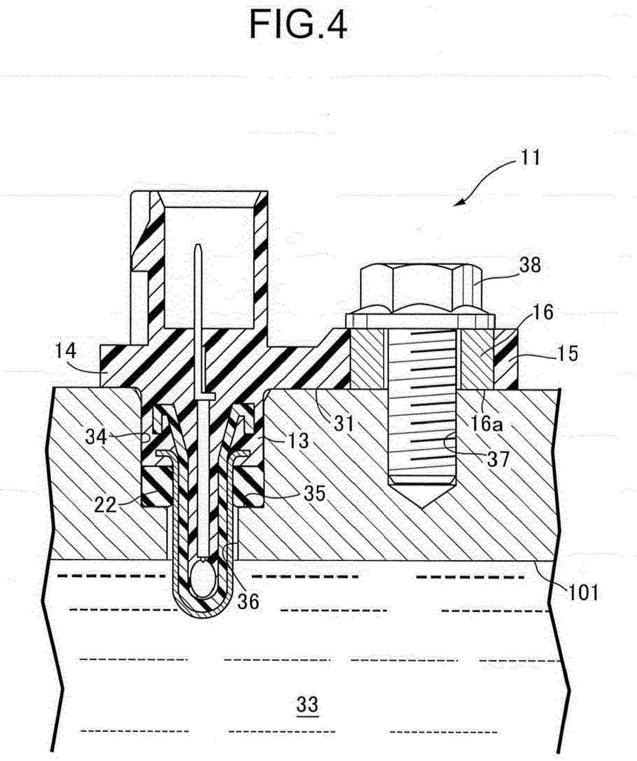

As shown in FIG. 4, a cooling water passage 33 is formed in the water jacket 101. For mounting the temperature detection device 11, an insertion hole 34 opening from the outside to the cooling water passage 33 is formed in the water jacket 101. The insertion hole 34 defines a columnar space having the same diameter as the insertion part 13 of the resin case 12. The columnar space and the cooling water passage 33 are separated via a partition wall 35. Formed in the partition wall 35 is a through hole 36 having a smaller diameter than that of the insertion hole 34. The through hole 36 defines a columnar space that is coaxial with the columnar space of the insertion hole 34. When the insertion part 13 is inserted into the insertion hole 34, the metal cap 21 enters the through hole 36. The extremity 21a of the metal cap 21 projects into the passage 33. In this arrangement, the O ring 22 is sandwiched between the partition wall 35 and the insertion part 13 around the metal cap 21. Moreover, the outer periphery of the O ring 22 is in intimate contact with the inner face of the insertion hole 34.

A screw hole 37 having an axis parallel to the axis of the insertion hole 34 is formed in the water jacket 101. A female thread is cut in an inner face of the screw hole 37. When the insertion part 13 of the resin case 12 is fitted into the insertion hole 34, the metal collar 16 is disposed coaxially with the screw hole 37. A bolt 38 for example is screwed into the screw hole 37. A head part of the bolt 38 is received by the metal collar 16. In this way, the temperature detection device 11 is immovably fixed to the water jacket 101.

The temperature detection device 11 makes contact with cooling water via the metal cap 21. The thermal energy of the cooling water is transferred from the metal cap 21 to the resin cap 25. Since the metal cap 21 has a higher strength than that of a resin cap having the same shape, the thickness of the resin cap 25 can be reduced. Therefore, thermal energy can be transferred efficiently from the metal cap 21 to the thermistor 27 with the resin cap 25 sandwiched therebetween. The thermistor 27 outputs an electrical signal according to the water temperature of the cooling water. The water temperature is thus detected.

Although the temperature detection device 11 is in contact with the cooling water via the metal cap 21, since the O ring 22 is in intimate contact with the metal cap 21 and the partition wall 35, the resin case 12 can escape from being in contact with the cooling water. As a result, the resin can be prevented from swelling. Moreover, since the outer periphery of the O ring 22 is in intimate contact with an inner wall face of the insertion hole 34, the O ring 22 partitions the interior of the insertion hole 34 into a space in which the metal cap 21 is exposed and a space in which the insertion part 13 and the flange 14 are exposed. Therefore, cooling water as a measurement target does not move around the O ring 22 and reach the insertion part 13 or the flange 14. Waterproofness can thus be realized for the resin case 12.

In the temperature detection device 11 related to the present embodiment, the metal cap 21 is fitted onto the extremity of the resin case 12. Since the metal cap 21 is fitted only onto the extremity of the resin case 12, compared with a case in which the entire case is made of metal, the weight of the temperature detection device 11 can be lightened. Moreover, since the metal cap 21 is formed by deep drawing of a metal thin plate, and the resin case 12 is integrally molded by for example injection molding, the production cost can be reduced. The rounded closed extremity can extend from the thermistor 27 at as uniform a distance as possible, and as a result good heat conduction can be realized.

In the temperature detection device 11, since the resin cap 25 on the inner side is embedded in the resin case 12 at the second length L2, which is longer than the first length L1 for the metal cap 21 on the outer side, it is possible by means of the resin cap 25 alone to enhance the resin bonding strength between the resin cap 25 and the resin case 12, and as a result the strength via which the metal cap 21 and the resin case 12 are joined can be weaker. It is possible to contribute to a reduction in the size of the metal cap 21 and a lightening of the weight.

The coupler 17 is continuous from the flange 14 in the direction of the axis of the insertion part 13 and has a metal terminal. Compared with a conventional case in which a coupler is molded with a thermistor or a lead wire inserted directly into a metal cap, it is possible to shorten the length of the coupler 17 in the resin case 12 and to alleviate vibration or impact from the resin case 12 acting on a sensor part.

When fixing the temperature detection device 11, the insertion part 13 of the resin case 12 is inserted into the insertion hole 34 of the water jacket 101. Since the flange 14 has a larger diameter than that of the insertion part 13, the flange 14 abuts against a part around the insertion hole 34 to thus position the metal cap 21 in the axial direction with respect to the water jacket 101. Since the metal cap 21 does not extend throughout the insertion part 13, the rear end of the metal cap 21 does not protrude from the water jacket 101, and radiation of heat from the metal cap 21 is suppressed. In this way, the thermal energy of the cooling water is reliably transferred to the thermistor 27 via the metal cap 21. The temperature can be measured effectively.

As described above, when the temperature detection device 11 is utilized as a temperature sensor for the cooling water of the engine 100, in a state in which the metal cap 21 is sealed with the O ring 22, the extremity 21a of the metal cap 21 is disposed within the passage 33 via the through hole 36, which is continuous with the insertion hole 34 and has a smaller diameter than the insertion hole 34. Since only the metal cap 21 is in contact with the cooling water of the engine 100 and the resin case 12 is sealed so that it does not contact the cooling water, the durability of the temperature detection device 11 is improved, and an appropriate sealing structure can simply be realized merely by fitting it into the insertion hole 34 via the O ring 22.

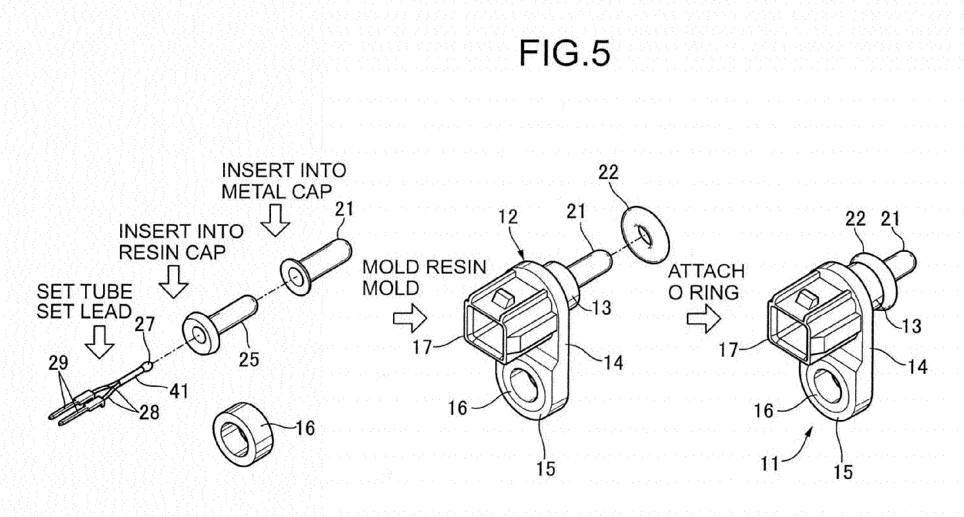

A method for producing the temperature detection device 11 of the present embodiment is now explained. First, as shown in FIG. 5, two of the lead wires 28 connected to the thermistor 27 are individually connected to two of the metal terminals 29. For the connection, for example, soldering, etc. may be employed. In this arrangement, a resin tube 41 is fitted around the two lead wires 28 over a predetermined length from the thermistor 27. The resin tube 41 collects the two lead wires 28 into one. The length of the resin tube 41 is set so that the lead wires 28 are collected into one within the resin cap 25.

Subsequently, the thermistor 27 is inserted into the resin cap 25, which is molded from a resin in advance. In this process, the two lead wires 28, which are separated further from each other in going away from the rear end of the resin tube 41, are provisionally fixed to an inner peripheral face of the resin cap 25 and form an assembly. After the insertion, the resin cap 25 is fitted into the metal cap 21. Alternatively, the resin cap 25 may be fitted into the metal cap 21 in advance.

While retaining the thermistor 27 within the resin cap 25, the metal cap 21 and the metal collar 16 are placed in a cavity within a mold for the resin case 12. A molten resin material is poured into the cavity within the mold, the resin material subsequently solidifies within the cavity of the mold, and the thermistor 27 and the lead wire 28 are fixed within the resin cap 25. The metal collar 16 is fixed within the mounting part 15. The resin case 12 is integrally molded within the cavity.

In this way, the resin case 12 can be molded for example in accordance with injection molding from a resin material. Upon injection molding, the metal cap 21 and the metal collar 16 are enclosed in a resin material. In this arrangement, the thermistor 27 and the lead wire 28 are housed within the resin cap 25 in advance. When pouring in the resin during molding, the thermistor 27 and the lead wire 28 are provisionally fixed with a defined positional relationship. The operating efficiency of the molding step is thus enhanced. Moreover, since the resin cap 25 is provided with the increased diameter portion 25a, the workability when inserting sensor components such as the thermistor 27 and the lead wire 28 into the resin cap 25 is improved, the production process can be made efficient, and the cost can be reduced.

In the temperature detection device 11 thus molded, the O ring 22 is fitted into the outer periphery of the metal cap 21. When the O ring 22 is pushed in the axial direction of the metal cap 21, the O ring 22 makes intimate contact with the insertion part 13 of the resin case 12. The extremity 21a of the metal cap 21 is subsequently inserted into the insertion hole 34 of the water jacket 101, and the flange 14 of the resin case 12 is made to abut against an outer wall face of the water jacket 101. The metal collar 16 is disposed coaxially with the screw hole 37, and the mounting part 15 of the resin case 12 is fastened to the outer wall of the water jacket 101 by means of the bolt 38 and fixed.

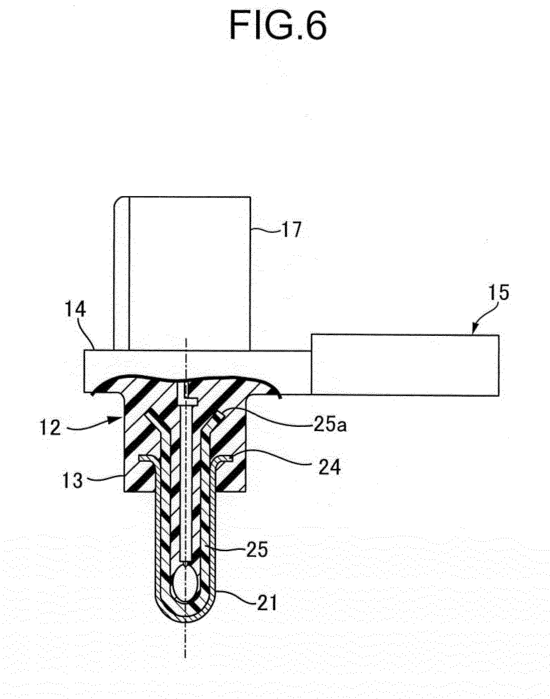

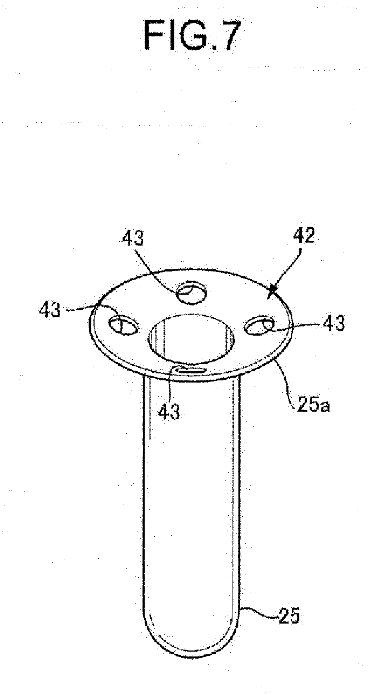

In the temperature detection device 11 as described above, as shown in FIG. 6, it is not always necessary for the latching part 26 to be continuous with the increased diameter portion 25a of the resin cap 25. In this arrangement, as shown in FIG. 7, the increased diameter portion 25a may be provided with a highly-bound part 42 for preventing displacement. The highly-bound part 42 may be formed from for example a plurality of through holes 43. The through hole 43 is filled with a resin material when the increased diameter portion 25a is enclosed in a resin material for the resin case 12. The resin bonding strength between the resin cap 25 and the resin case 12 is thus enhanced. Alternatively, the highly-bound part 42 may have a plurality of dimples or grooved parts such as screw threads instead of the through hole 43. By so doing, the degree of freedom in selecting the shape when enhancing the resin bonding strength between the resin cap 25 and the resin case 12 is increased.

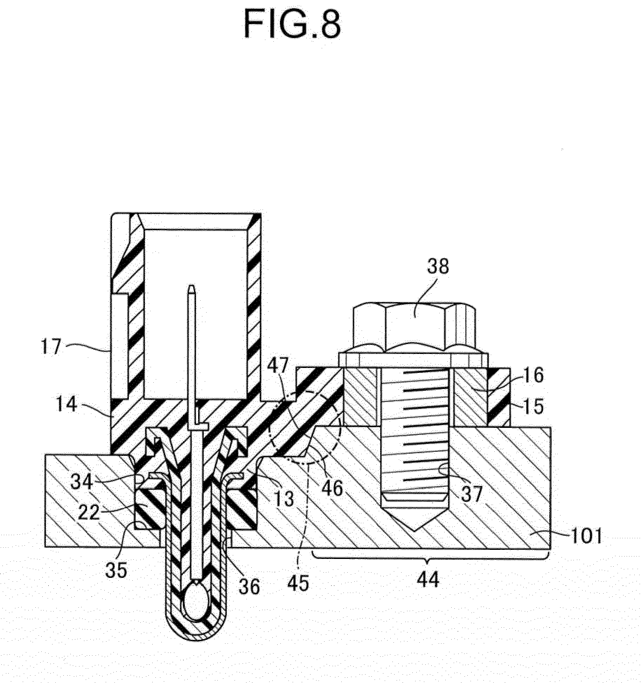

In FIG. 2, the mounting part 15 for the flange 14 and the mounting face 31 is flush and has a flat shape, but as shown in FIG. 8 a thick part 44 may be formed on an outer wall of the water jacket 101 around the screw hole 37. The thick part 44 plays a role in ensuring the strength of mounting of the bolt 38. On the other hand, the outer wall of the water jacket 101 around the insertion hole 34 may be formed so as to be thin. As a result, the weight of the water jacket 101 can be lightened. In this arrangement, a height-difference shape 45 corresponding to the thickness of the outer wall is formed on the outer wall face of the water jacket 101 between the screw hole 37 and the insertion hole 34. In response to such a height-difference shape 45, a shape-change part 46 that reflects the surface shape of the outer wall face of the water jacket 101 may be formed between the flange 14 and the mounting part 15 of the resin case 12. Here, a step 47 may be formed on the outer wall face of the water jacket 101 in response to the difference in height, and the shape-change part 46 may be a step part reflecting the step 47. In this way, since the shape of the mounting part 15 may be set so as to match the shape of the outer wall of the water jacket 101, it is not necessary to greatly change the shape of the insertion part 13, the flange 14 or the coupler 17, and the cost can be reduced. Furthermore, the strength of the outer wall of the water jacket 101 around the screw hole 37 can be increased without greatly changing the shape of the insertion part 13, the flange 14 or the coupler 17.

## Claims

1. A temperature detection device (11) comprising
a heat-sensitive element (27),
a lead wire (28) of the heat-sensitive element (27), and
a resin case (12) for fixing the lead wire (28), and
a metal cap (21) that is fitted onto an extremity of the resin case (12), wherein
the resin case (12) comprises a resin cap (25) that houses the lead wire (28) inside the metal cap (21),
the metal cap (21) is embedded in the resin case (12) at a first length (L1) from an end part of the resin case (12), and
the resin cap (25) is embedded in the resin case (12) at a second length (L2) from the end part of the resin case (12), the second length (L2) being longer than the first length (LI), **characterized in that** the heat-sensitive element (27) is fixed in the resin case (12) encased by the resin cap (25), and the resin cap (25) is sandwiched between the heat-sensitive element (27) and the metal cap (21).

2. The temperature detection device according to Claim 1, wherein the metal cap (21) is formed into a cylindrical shape having a rounded extremity (21a).

3. The temperature detection device according to Claim 1, wherein the resin cap (25) has an end part opening within a resin material of the resin case (12), said end part being provided with an increased diameter portion (25a) that extends outward in a radial direction of the resin cap (25).

4. The temperature detection device according to Claim 3, wherein the increased diameter portion (25a) is provided with a highly-bound part (42) for preventing displacement.

5. The temperature detection device according to any one of Claims 1 to 4, wherein the resin case (12) comprises a cylindrical insertion part (13) that is coaxial with the metal cap (21), has a larger diameter than a diameter of the metal cap (21), and supports the metal cap (21) via a front end thereof, and a flange (14) that is formed at a rear end of the insertion part (13) and extends from the insertion part (13) in a centrifugal direction, the metal cap (21) being provided within the insertion part (13) in an axial direction.

6. The temperature detection device according to Claim 5, comprising a coupler (17) that is continuous from the flange (14) in the axial direction of the insertion part (13) and has a metal terminal (29).

7. The temperature detection device according to Claim 5 or 6, comprising an O ring (22) that is fitted onto the metal cap (21) and extends further in the centrifugal direction than the insertion part (13) while contacting an extremity of the insertion part (13).

8. The temperature detection device according to Claim 7 suitable for detecting an engine cooling water temperature, wherein, the insertion part (13) is inserted into an insertion hole (34) bored in an outer wall of a water jacket (101) defining a passage (33) through which the cooling water is circulated, and an extremity (21a) of the metal cap (21) is disposed within the passage (33) via a through hole (36) that is continuous with the insertion hole (34) and has a smaller diameter than the insertion hole (34) in a state in which the metal cap (21) is sealed with the O ring (22).

9. The temperature detection device according to Claim 8, wherein the flange (14) has a shape-change part (46) that corresponds to a shape of an outer wall of the water jacket (101).

10. The temperature detection device according to Claim 9, wherein the shape-change part (46) is a step part (46) corresponding to a shape of a thick part (44) that bulges from an outer wall face of the water jacket (101).

## Patentansprüche

1. Temperaturerfassungsvorrichtung (11), welche aufweist:
ein wärmeempfindliches Element (27),
einen Leitungsdraht (28) des wärmeempfindlichen Elements (27), und
ein Kunststoffgehäuse (12) zum Fixieren des Leitungsdrahts (28), und
eine Metallkappe (21), die auf ein Ende des Kunststoffgehäuses (12) aufgesetzt ist, wobei
das Kunststoffgehäuse (12) eine Kunststoffkappe (25) aufweist, die den Leitungsdraht (28) innerhalb der Metallkappe (21) aufnimmt,
die Metallkappe (21) an einer ersten Länge (L1) von einem Endteil des Kunststoffgehäuses (12) in das Kunststoffgehäuse (12) eingebettet ist, und
die Kunststoffkappe (25) in das Kunststoffgehäuse (12) an einer zweiten Länge (L2) von dem Endteil des Kunststoffgehäuses (12) eingebettet ist, wobei die zweite Länge (L2) länger als die erste Länge (L1) ist,
**dadurch gekennzeichnet, dass** das wärmeempfindliche Element (27) in dem von der Kunststoffkappe (25) umschlossenen Kunststoffgehäuse (12) befestigt ist und die Kunststoffkappe (25) zwischen das wärmeempfindliche Element (27) und die Metallkappe (21) geschichtet ist.

2. Die Temperaturerfassungsvorrichtung nach Anspruch 1, wobei die Metallkappe (21) in einer zylindrischen Form mit einem gerundeten Ende (21a) ausgebildet ist.

3. Die Temperaturerfassungsvorrichtung nach Anspruch 1, wobei die Kunststoffkappe (25) ein Endteil aufweist, das sich im Kunststoffmaterial des Kunststoffgehäuses (12) öffnet, wobei das Endteil mit einem im Durchmesser vergrößerten Abschnitt (25a) versehen ist, der sich in radialer Richtung der Kunststoffkappe (25) auswärts erstreckt.

4. Die Temperaturerfassungsvorrichtung nach Anspruch 3, wobei der im Durchmesser vergrößerte Abschnitt (25a) mit einem hochgebogenen Teil (42) versehen ist, um eine Verlagerung zu verhindern.

5. Die Temperaturerfassungsvorrichtung nach einem der Ansprüche 1 bis 4, wobei das Kunststoffgehäuse (12) ein zylindrisches Einsetzteil (13) aufweist, das zu der Metallkappe (21) koaxial ist, einen größeren Durchmesser als einen Durchmesser der Metallkappe (21) hat, und über sein vorderes Ende die Metallkappe (21) trägt, sowie einen Flansch (14), der am hinteren Ende des Einsetzteils (13) ausgebildet ist und sich von dem Einsetzteil (13) in Zentrifugalrichtung erstreckt, wobei die Metallkappe (21) in axialer Richtung mit dem Einsetzteil (13) versehen ist.

6. Die Temperaturerfassungsvorrichtung nach Anspruch 5, die eine Kupplung (17) aufweist, die sich von dem Flansch (14) in der axialen Richtung des Einsetzteils (13) fortsetzt und einen Metallanschluss (29) aufweist.

7. Die Temperaturerfassungsvorrichtung nach Anspruch 5 oder 6, die einen O-Ring (22) aufweist, der auf die Metallkappe (21) aufgesetzt ist und sich in der Zentrifugalrichtung weiter erstreckt als das Einsetzteil (13), während er ein Ende des Einsetzteils (13) kontaktiert.

8. Die Temperaturerfassungsvorrichtung nach Anspruch 7, die zum Detektieren einer Motorkühlwassertemperatur geeignet ist, wobei das Einsetzteil (13) in ein Einsetzloch (34) eingesetzt ist, das in eine Außenwand eines Wassermantels (101) gebohrt ist, der einen Kanal (33) definiert, durch den das Kühlwasser zirkuliert, und ein Ende (21a) der Metallkappe (21) in dem Kanal (33) ein Durchgangsloch (36) durchsetzt, das sich an das Einsetzloch (34) anschließt und einen kleineren Durchmesser als das Einsetzloch (34) hat, in einem Zustand, in dem die Metallkappe (21) mit dem O-Ring (22) abgedichtet ist.

9. Die Temperaturerfassungsvorrichtung nach Anspruch 8, wobei der Flansch (14) ein Formänderungsteil (46) aufweist, das einer Form einer Außenwand des Wassermantels (101) entspricht.

10. Die Temperaturerfassungsvorrichtung nach Anspruch 9, wobei das Formänderungsteil (46) ein Stufenteil (46) ist, das einer Form eines dicken Teils (44) entspricht, das von einer Außenwandfläche des Wassermantels (101) vorgewölbt ist.

## Revendications

1. Dispositif de détection de température (11) comprenant
un élément sensible à la chaleur (27),
un fil conducteur (28) de l'élément sensible à la chaleur (27), et
un boîtier en résine (12) pour fixer le fil conducteur (28), et
un capuchon métallique (21) qui est monté sur une extrémité du boîtier en résine (12), dans lequel
le boîtier en résine (12) comprend un capuchon en résine (25) qui loge le fil conducteur (28) à l'intérieur du capuchon métallique (21),
le capuchon métallique (21) est incrusté dans le boîtier en résine (12) à une première longueur (L1) à partir d'une partie d'extrémité du boîtier en résine (12), et
le capuchon en résine (25) est incrusté dans le boîtier en résine (12) à une deuxième longueur (L2) à partir de la partie d'extrémité du boîtier en résine (12), la deuxième longueur (L2) étant plus longue que la première longueur (L1),
**caractérisé en ce que** l'élément sensible à la chaleur (27) est fixé dans le boîtier en résine (12) entouré par le capuchon en résine (25), et le capuchon en résine (25) est intercalé entre l'élément sensible à la chaleur (27) et le capuchon métallique (21).

2. Dispositif de détection de température selon la revendication 1, dans lequel le capuchon métallique (21) est formé sous une forme cylindrique ayant une extrémité arrondie (21a).

3. Dispositif de détection de température selon la revendication 1, dans lequel le capuchon en résine (25) a une partie d'extrémité s'ouvrant à l'intérieur d'un matériau en résine du boîtier en résine (12), ladite partie d'extrémité étant pourvue d'une partie de diamètre accru (25a) qui s'étend vers l'extérieur dans une direction radiale du capuchon en résine (25).

4. Dispositif de détection de température selon la revendication 3, dans lequel la partie de diamètre accru (25a) est pourvue d'une partie fortement liée (42) pour empêcher un déplacement.

5. Dispositif de détection de température selon l'une quelconque des revendications 1 à 4, dans lequel le boîtier en résine (12) comprend une partie d'insertion (13) cylindrique qui est coaxiale avec le capuchon métallique (21), a un diamètre plus grand qu'un diamètre du capuchon métallique (21), et supporte le capuchon métallique (21) via une extrémité avant de celui-ci, et une bride (14) qui est formée à une extrémité arrière de la partie d'insertion (13) et s'étend à partir de la partie d'insertion (13) dans une direction centrifuge, le capuchon métallique (21) étant fourni à l'intérieur de la partie d'insertion (13) dans une direction axiale.

6. Dispositif de détection de température selon la revendication 5, comprenant un coupleur (17) qui est continu à partir de la bride (14) dans la direction axiale de la partie d'insertion (13) et a une borne métallique (29).

7. Dispositif de détection de température selon la revendication 5 ou 6, comprenant un joint torique (22) qui est monté sur le capuchon métallique (21) et s'étend plus loin dans la direction centrifuge que la partie d'insertion (13) tout en entrant en contact avec une extrémité de la partie d'insertion (13).

8. Dispositif de détection de température selon la revendication 7 approprié pour détecter une température d'eau de refroidissement de moteur, dans lequel, la partie d'insertion (13) est insérée dans un trou d'insertion (34) percé dans une paroi externe d'une chemise d'eau (101) définissant un passage (33) à travers lequel l'eau de refroidissement circule, et une extrémité (21a) du capuchon métallique (21) est disposée à l'intérieur du passage (33) via un trou traversant (36) qui est continu avec le trou d'insertion (34) et a un diamètre plus petit que le trou d'insertion (34) dans un état dans lequel le capuchon métallique (21) est scellé avec le joint torique (22).

9. Dispositif de détection de température selon la revendication 8, dans lequel la bride (14) a une partie de changement de forme (46) qui correspond à une forme d'une paroi externe de la chemise d'eau (101).

10. Dispositif de détection de température selon la revendication 9, dans lequel la partie de changement de forme (46) est une partie étagée (46) correspondant à une forme d'une partie épaisse (44) qui fait saillie à partir d'une face de paroi externe de la chemise d'eau (101).
